# EUROPÄISCHE PATENTSCHRIFT

(11) **EP 2 291 579 B1**
(45) Veröffentlichungstag und Bekanntmachung des Hinweises auf die Patenterteilung: **09.11.2016**
(21) Anmeldenummer: 09757155.8
(22) Anmeldetag: 08.05.2009
(51) Int. Cl.: F01N 3/025, F01N 3/20, F01N 3/36, F23D 11/10, F23D 11/44, F23G 7/06

(54) **ABGASNACHBEHANDLUNGSSYSTEM FÜR EINE SELBSTZÜNDENDE BRENNKRAFTMASCHINE**
EXHAUST-GAS AFTERTREATMENT SYSTEM FOR AN AUTO-IGNITION INTERNAL COMBUSTION ENGINE
SYSTÈME DE POST-TRAITEMENT DES GAZ D ÉCHAPPEMENT POUR UN MOTEUR À COMBUSTION INTERNE À AUTO-ALLUMAGE

(30) Priorität: 03.06.2008 DE 102008026477
(43) Veröffentlichungstag der Anmeldung: 09.03.2011
(73) Patentinhaber: DEUTZ Aktiengesellschaft, 51149 Köln (DE)
(72) Erfinder: MIEBACH, Rolf, 50321 Brühl (DE); BROLL, Peter, 51429 Bergisch-Gladbach (DE); SCHRAML, Stephan, 53639 Königswinter (DE)
(86) Internationale Anmeldenummer: PCT/EP2009/003280
(87) Internationale Veröffentlichungsnummer: WO 2009/146771

(56) Entgegenhaltungen:
- DE-A1- 3 732 492
- DE-A1- 4 441 261
- DE-A1-102004 051 905
- DE-B3-102006 015 841
- GB-A- 2 161 915
- JP-A- 2005 180 371
- US-A- 4 576 617

## Beschreibung

Die Erfindung betrifft ein Abgasnachbehandlungssystem für insbesondere eine selbstzündende Brennkraftmaschine mit einem in ein Gehäuse eingesetzten Katalysator und/oder Partikelfilter, dem/denen ein stromaufwärts in einer Abgasleitung angeordneter Brenner zugeordnet ist, dem über eine Kraftstoffdüseneinrichtung Kraftstoff und weiterhin Brennluft zuführbar sind und wobei die Brennluft mit dem aus der Kraftstoffdüseneinrichtung austretenden Kraftstoff in einer nachgeschalteten Luftdrallzerstäuberdüse vermischt wird. Weiterhin betrifft die Erfindung ein Verfahren zum Betreiben eines derartigen Abgasnachbehandlungssystems.

Ein derartiges Abgasnachbehandlungssystem ist aus der DE 42 42 091 C2 bekannt. Dieses als Partikelfiltersystem ausgebildete Abgasnachbehandlungssystem weist einen Brenner mit einer als Zerstäuberdüse ausgebildeten Kraftstoffdüseneinrichtung auf, die einer Luftdrallzerstäuberdüse, in der in die Luftdrallzerstäuberdüse eingeführte Brennluft mit dem aus der Zerstäuberdüse austretenden Kraftstoff vermischt wird, vorgeschaltet ist. Mit einer der Zerstäuberdüse zugeordneten Heizeinrichtung kann der Kraftstoff in der Zerstäuberdüse soweit erhitzt werden, dass er verdampft. Dieser verdampfte Kraftstoff wird anschließend in der Luftdrallzerstäuberdüse mit Brennluft vermischt und dieses Gemisch wird in einer hinter der Luftdrallzerstäuberdüse angeordneten Brennkammer durch eine Zündeinrichtung, beispielsweise eine Funkenzündeinrichtung, entzündet. Um die so hervorgerufene Verbrennung in der Brennkammer zu kontrollieren, ist eine Temperaturmesssonde vorgesehen, die mit ihrer Messspitze in einen Austritt aus der Brennkammer hineinragt und die dort herrschende Brenntemperatur erfasst. Die an der Kraftstoffdüse angeordnete Heizeinrichtung kann einen oder mehrere Glühstifte umfassen, die in den Düsenkörper hineinragen und diesen erhitzen. Es kann aber auch vorgesehen sein, zumindest einen Heizwendel einzusetzen, der in geeigneter Form insbesondere den Düsenkörper erhitzen kann.

Eine weitere Abgasnachbehandlungseinrichtung in Form eines Regenerationsbrenners ist aus der DE 42 43 035 A1 bekannt. Dieser Regenerationsbrenner für ein Partikelfiltersystem weist ebenfalls eine als Zerstäuberdüse ausgebildete Kraftstoffdüseneinrichtung auf, die mit einer Heizeinrichtung versehen ist, mittels der der aus dieser Zerstäuberdüse austretende Kraftstoff verdampft und auch entzündet werden kann. Den für die Verbrennung notwendigen Sauerstoff entzieht der aus der Zerstäuberdüse austretende Kraftstoffstrahl dem an der Zerstäuberdüse vorbeigeführten Abgas. Die Kraftstoffdüseneinrichtung ist so ausgebildet, dass diese einen länglichen Düsenkörper aufweist, in dessen Zentrum ein Glühstift angeordnet ist und der sich bis aus der Kraftstoffdüseneinrichtung hinaus erstreckt. Dieser Glühstift ragt dabei mit seiner Spitze genau radial mittig koaxial zu der Längsachse durch die Düsenöffnung hindurch. Im Bereich des Durchtritts durch die Düsenöffnung sind Rotationselemente vorgesehen, die den austretenden Kraftstoff in feine Tröpfchen zerstäuben sollen, so dass eine intensive Vermischung mit dem Abgas erfolgen soll.

Der Erfindung liegt die Aufgabe zugrunde, ein Abgasnachbehandlungssystem mit einem Brenner bereitzustellen, das bei kompaktem Aufbau zuverlässig arbeitet und bei dem die zugeführte Energie zum Betrieb des Brenners gegenüber bekannten Systemen reduziert ist. Weiterhin soll das Abgasnachbehandlungssystem für alle denkbaren Varianten eines solchen Systems verwendbar sein.

Diese Aufgabe wird dadurch gelöst, dass die Kraftstoffdüseneinrichtung einen sich zumindest von einem Eintritt bis zu einem Austritt erstreckenden Düsenkörper mit darin angeordnetem Trägerkörper aufweist, die zusammen einen filmbildenden Kraftstoffzufuhrkanal formen. Diese kraftstofffilmbildende Ausgestaltung des Kraftstoffzufuhrkanals bietet den Vorteil, dass der an dem Austritt der Kraftstoffdüseneinrichtung austretende beziehungsweise sich ablösende Kraftstoff für eine Vermischung mit Brennluft besser vorbereitet ist als wenn der Kraftstoff beim Austritt aus der Kraftstoffdüseneinrichtung fein zerstäubt ist. Es hat sich nämlich herausgestellt, dass der fein zerstäubte Kraftstoff bei der anschließenden Vermischung und Entzündung mit Brennluft wesentlich empfindlicher auf Änderungen in dem System reagiert. Dabei bestehen ganz besondere Probleme, wenn der Kraftstoff durch ein oder mehrere Röhrchen in eine Luftdrallzerstäuberdüse eingespritzt wird. Grundsätzlich ist mit einem solchen Röhrchen bei einer genauen Abstimmung der durchgeführten Kraftstoffmenge und des Strömungsdurchmessers durch das Röhrchen eine Zerstäubung des Kraftstoffs (mit den geschilderten Nachteilen) möglich, es besteht aber beispielsweise bei einer Erhöhung des Strömungsdurchsatzes leicht die Gefahr, dass der austretende Kraftstoffstrahl nicht mehr (vollständig) zerstäubt wird und zumindest ein Teil des Kraftstoffstrahls unzerstäubt durch die Luftdrallzerstäuberdüse hindurchtritt. Ein solches System ist bezüglich seiner Brenneigenschaften instabil. Alle diese Nachteile werden durch die erfindungsgemäße Ausgestaltung vermieden.

In Weiterbildung der Erfindung bilden der Trägerkörper und der Düsenkörper einen ringförmigen Kraftstoffzufuhrkanal. Ein solcher ringförmiger Kraftstoffzufuhrkanal soll für eine stabile Filmbildung eine bestimmte Mindestlänge aufweisen, wobei diese Mindestlänge wiederum in vorteilhafter Ausgestaltung mindestens das 10fache des Strömungsradius' des Kraftstoffzufuhrkanals betragen soll.

In weiterer Ausgestaltung der Erfindung ist ein im Bereich des Austritts angeordneter Abschnitt des Trägerkörpers filmablösend ausgebildet. Dabei stellt in einer bevorzugten Ausgestaltung dieser Abschnitt das Ende des Trägerkörpers dar, wobei dieses Ende wiederum bevorzugt geringfügig über den Austritt hinaus ragt. Eine solche Ausgestaltung eines filmbildenden Kraftstoffzufuhrkanals und der bewusst filmablösenden Trennung von dem Trägerkörper im Bereich des Austritts hat sich für die zuvor angesprochene Vermischung mit Brennluft besonders günstig erwiesen.

In Weiterbildung der Erfindung ist der Trägerkörper über den filmablösenden Abschnitt des Trägerkörpers (deutlich) hinausragend ausgebildet. Der Trägerkörper kann dabei gegebenenfalls bis durch die Luftdrallzerstäuberdüse hindurch bis in eine nachfolgende Brennkammer ragen. Der Abschnitt kann beispielsweise einen filmablösenden Absatz aufweisen. Der gesamte Trägerkörper kann bei dieser Ausgestaltung hohl ausgebildet sein, mit einer sekundären Kraftstoffversorgungseinrichtung verschaltet sein und zur sekundären Kraftstoffzufuhr in die Brennkammer dienen.

In weiterer Ausgestaltung der Erfindung ist der Abschnitt so ausgebildet, dass der Kraftstofffilm insbesondere eine aufpilzende Ausbreitung erfährt. Hierzu ist zu bemerken, dass die für den in dem Abschnitt endenden und für den über den Abschnitt hinaus weitergeführten Trägerkörper gilt. Dabei ist das Maß der Aufpilzung mit dem Eintritt bzw. dem Durchmesser der nachfolgenden Luftdrallzerstäuberdüse so abgestimmt, dass der Kraftstoffkegel einerseits von der in eine Drallströmung versetzten Brennluft erfasst wird und dann in der Luftdrallzerstäuberdüse durch die insbesondere in einer zweiten Stufe der Luftdrallzerstäuberdüse eintretenden weiteren Brennluft zu einem homogenen Gemisch aufgearbeitet wird. Je nach Ausgestaltung des Kraftstoffzufuhrkanals (und insbesondere bei einem großen Durchmesser des Trägerkörpers) kann es auch vorteilhaft bzw. nötig sein, den an dem Abschnitt ablösenden Kraftstofffilm einschnürend durch eine entsprechende Gestaltung des Abschnitts zu gestalten. In weiterer Ausgestaltung der Erfindung ist der Querschnitt des Austritts veränderbar. Durch eine solche Ausgestaltung kann relativ einfach eine Korrektur des Querschnitts (und damit die Filmbildung) erfolgen, wenn dieser von einem Vorgabewert abweicht, beispielsweise verursacht durch unterschiedliche Temperaturen (und gegebenenfalls entgegenwirkender Materialausdehnungskoeffizienten). Auch kann dadurch eine Anpassung an unterschiedliche austretende Kraftstoffmengen erfolgen.

Erfindungsgemäss ist an der Kraftstoffdüseneinrichtung eine Heizeinrichtung vorgesehen. Allgemein ist dadurch eine günstige Beeinflussung des Kraftstofffilms bei höheren Viskositäten möglich. Erfindungsgemäss ist die Heizeinrichtung zum zumindest zeitweiligen Verdampfen und/oder Zersetzen des Kraftstoffs ausgelegt. Damit ist die Möglichkeit einer Entzündung von Kraftstoff geschaffen. Die Heizeinrichtung ist in ein Kraftstoffdüsengehäuse, insbesondere in den Düsenkörper, integriert. Dies kann durch zumindest einen Glühstift realisiert sein, der den Düsenkörper aufheizt. Bezüglich einer schnellen und gleichmäßigen Aufheizung des Düsenkörpers ist es aber günstiger und effektiver, die Heizeinrichtung als (Heiz)-Wendel auszubilden, die den Düsenkörper umfasst oder in diesen integriert ist.

In Weiterbildung der Erfindung ist die Heizeinrichtung in den Trägerkörper integriert bzw. der Trägerkörper selbst ist eine beispielsweise als Glühstift ausgebildete Heizeinrichtung. Dadurch ist der Bauaufwand gering gehalten und die so ausgebildete Heizeinrichtung ist effektiver als eine solche, die den Düsenkörper aufheizt. Somit ist auch der Energieeinsatz verringert. Ist der Trägerkörper - wie zuvor ausgeführt - deutlich über den Austritt hinausragend ausgebildet, kann dies bei Einsatz eines Glühstiftes, der bevorzugt im Bereich des Austritts endet, dass an diesem ein weiterreichendes Bauteil befestigt ist.

Das erfindungsgemäße Verfahren zum Betreiben eines derartigen Abgasnachbehandlungssystems zeichnet sich dadurch aus, dass
a) während einer Startphase des Brenners durch die Heizeinrichtung eine Verdampfung und nachfolgende Entzündung des Kraftstoffs zu einer Zündflamme eingestellt wird,
b) die Zündflamme in eine der Luftdrallzerstäuberdüse nachgeschalteten und dem Rußfilter vorgeschalteten Brennkammer getragen wird,
c) der Brennkammer zusätzlicher Kraftstoff zugeführt wird und dieser von der Zündflamme entzündet wird
d) und anschließend die Heizeinrichtung abgeschaltet wird.

Durch die Anwendung dieses erfindungsgemäßen Verfahrens in Verbindung mit der dargestellten Vorrichtung ist es gelungen, ein System bereitzustellen, bei dem nur während einer Startphase (elektrische) Energie zum Erhitzen bzw. Verdampfen und Entzünden) des Kraftstoffs zuzuführen ist. Während dieser Startphase funktioniert das System quasi als Pilotbrenner zur Entzündung der während der eigentlichen Brennphase beispielsweise während der Regeneration des Partikelfilters zuzuführenden größeren Kraftstoff-Luftmenge.

Weitere vorteilhafte Ausgestaltungen der Erfindung sind in der nachfolgenden Figurenbeschreibung gegeben, in der ein in den Figuren dargestelltes Ausführungsbeispiel der Erfindung näher beschrieben ist. Es zeigen:

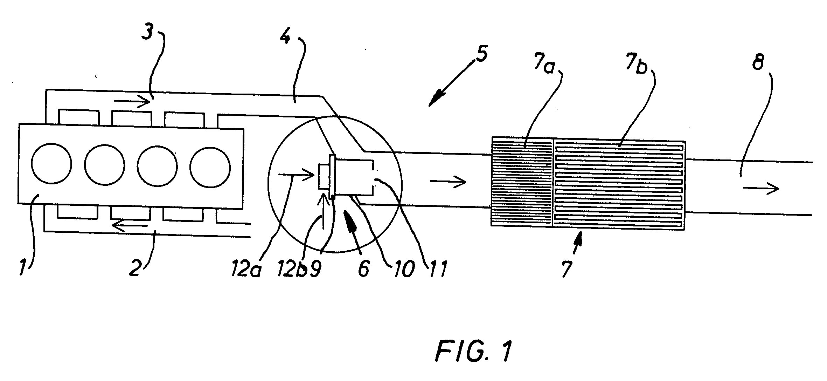

- Fig. 1: eine schematische Gesamtansicht einer Brennkraftmaschine mit einem Abgasnachbehandlungssystem und
- Fig. 2: eine Detailansicht des Brenners gemäß Fig. 1.

Eine Brennkraftmaschine 1 ist in dem dargestellten Ausführungsbeispiel eine 4-zylindrige selbstzündende Brennkraftmaschine 1, die mit einem Common-Rail-Einspritzsystem, Abgasturboaufladung und Abgasrückführung ausgestattet sein kann und selbstverständlich auch beliebige andere Zylinderzahlen aufweisen kann. In dem Ausführungsbeispiel wird der Brennkraftmaschine 1 über ein Frischgasleitungssystem 2 Verbrennungsluft zugeführt, während der Kraftstoff über das Einspritzsystem direkt in die einzelnen Zylinderbrennräume eingespritzt wird. Das Abgas wird in einen Abgassammler 3 abgeführt und dort über eine Abgasleitung 4 einem Abgasnachbehandlungssystem 5 zugeführt.

Das Abgasnachbehandlungssystem 5 weist einen Brenner 6 und einen Katalysator und/oder Partikelfilter 7 auf. In dem Ausführungsbeispiel sind ein Katalysator 7a und ein Partikelfilter 7b vorhanden. Grundsätzlich können hier alle bekannten für eine Abgasnachbehandlung geeigneten Vorrichtungen und Vorrichtungskombinationen vorhanden sein. So kann ein Partikelfilter 7b alleine vorhanden sein, wobei dann von dem Brenner 6 die in dem Partikelfilter 7b aus dem Abgas ausgefilterten und eingelagerten Partikel verbrannt werden. Es kann aber auch vorgesehen sein, dass eine Kombination aus Katalysator 7a und Partikelfilter 7b vorhanden sind, wobei dann die möglichen Ausbildungen als SCR-Katalysator (selektive katalytische Reduktion) Oxydationskatalysator und NOx-Speicherkatalysator jeweils in Kombination mit dem Partikelfilter 7b vorhanden sind. In diesem Falle wird der Brenner 6 zur Erhöhung der Abgastemperatur und zur Einleitung der jeweiligen Reaktion in dem entsprechenden Katalysator 7a eingesetzt. Schließlich ist es auch möglich, nur einen Katalysator 7a entsprechend den vorherigen Möglichkeiten einzusetzen, wobei auch in diesem Falle der Brenner 6 zur Erhöhung der Abgastemperatur und zur Einleitung der entsprechenden Reaktion in dem Katalysator 7a verwendet wird.

In dem Ausführungsbeispiel wird das Abgas über die Abgasleitung 4 und den eingeschalteten Brenner in Vollstrom durch den Katalysator 7a und Partikelfilter 7b geleitet und verlässt das System über eine Auspuffleitung 8. Im Rahmen der Erfindung ist es selbstverständlich auch möglich, dass Abgasnachbehandlungssystem 5 in einem im Nebenstrom oder isolierten System einzusetzen.

Der Brenner 6 weist ein Brennergehäuse 9 auf, an dem bzw. in dem die wesentlichen Brennerkomponenten befestigt sind und eine mit dem Brennergehäuse 9 verbundene Brennkammer 10, die in die Abgasleitung 4 hineinragt. Die Brennkammer 10 weist in Strömungsrichtung des Abgases zu dem Katalysator 7a hin eine Öffnung 11 auf, in die beispielsweise Verwirbelungskomponenten eingesetzt sein können. Dem Brenner 6 wird - durch Pfeile 12a, 12b dargestellt - Kraftstoff und Brennluft zugeführt. Gesteuert wird das Abgasnachbehandlungssystem durch eine elektronische Steuereinrichtung, die Bestandteil des Steuersystems für die Brennkraftmaschine 1 sein kann. Dieser Steuereinrichtung werden notwendige Daten, wie beispielsweise Abgastemperatur vor dem Brenner 6, hinter dem Brenner 6 und in der Auspuffleitung 8 (gegebenenfalls auch in dem Katalysator 7a und dem Partikelfilter 7b), zugeführt und darüber hinaus werden gegebenenfalls Druckwerte in dem Abgasstrom vor dem Katalysator 7a und hinter dem Partikelfilter 7b bzw. bei anderer Konstellation der jeweils vorhandenen Komponenten ermittelt und weitergeleitet. Aus weiterhin in der Steuereinrichtung abgespeicherten Kennfeldern können noch weitere Daten abgelegt und bedarfsweise abgefragt werden.

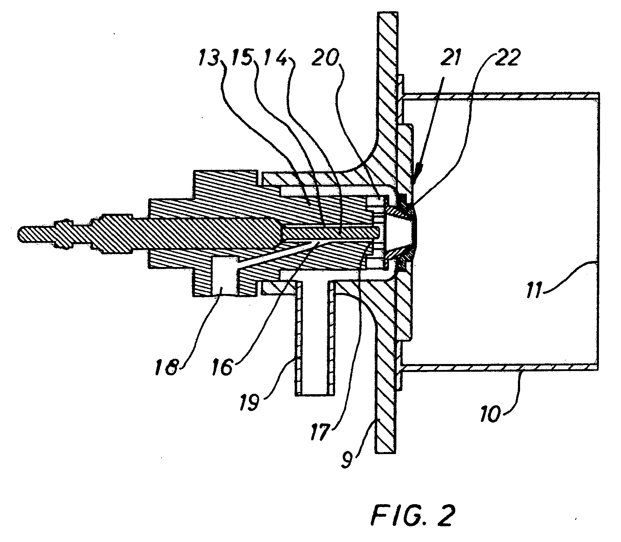

Der Brenner 6 gemäß Fig. 2 weist - wie schon ausgeführt - ein Brennergehäuse 9 mit dem in dieses teilweise eingesetzten Brennerkomponenten auf sowie die mit dem Brennergehäuse 9 insbesondere verschraubte Brennkammer 10, die in dem Ausführungsbeispiel gemäß Fig. 2 mit einer Öffnung 11 dargestellt ist, die sich über den gesamten Umfang der Brennkammer 10 erstreckt. In das Brennergehäuse 9 ist als wesentlicher Bestandteil der Brennerkomponenten ein Düsenkörper 13 und ein darin angeordneter Trägerkörper 14 angeordnet. Der Düsenkörper 13 und der Trägerkörper 14 bilden einen ringförmigen Kraftstoffkanal 15, der sich zumindest von einem Eintritt 16 für den Kraftstoff bis zu einem Austritt 17, der der Brennkammer 10 zugewandt ist, erstreckt. Der Kraftstoff wird dem Eintritt 16 über eine Zufuhrleitungseinrichtung 18 zugeführt. In dem von dem Düsenkörper 13 und dem Trägerkörper 14 gebildeten ringförmigen Kraftstoffkanal 15 wird der Kraftstoff als filmförmiger Strahl ausgebildet, wobei dieser, wenn der Trägerkörper 14 - wie in der Figur 2 dargestellt - sich über den Austritt 17 hinaus erstreckt, bis zum Ende des Trägerkörpers 14 an diesem anhaftet. Erst am Ende des Trägerkörpers 14 löst sich der Kraftstoff filmabreißend von dem Trägerkörper 14 ab. Je nach Ausgestaltung des Endes (oder eines entsprechenden Abschnitts bei einer Weiterführung des Trägerkörpers) kann der Abriss beispielsweise aufpilzend oder einschnürend erfolgen. Für den Fall, dass der Trägerkörper 14 genau mit dem Austritt 17 aus dem Düsenkörper 13 endet, erfolgt an dem Austritt 17 der Abriss des Kraftstoff-Films.

Die Brennluft wird dem Abgasnachbehandlungssystem 5 über einen Stutzen 19 zugeleitet und ein Teilstrom der Brennluft trifft im Bereich vor einer Luftdrallzerstäuberdüse 21 (in Richtung zu der Brennkammer 10) auf den aus dem Austritt 17 austretenden Kraftstoff. Diesem Teilstrom der Brennluft wird vor dem Zusammenkommen mit dem Kraftstoff durch eine Dralleinrichtung 20 ein Drall aufgeprägt, während ein anderer Teilstrom der Brennluft direkt in die Luftdrallzerstäuberdüse 21 eingeleitet wird. In der Luftdrallzerstäuberdüse 21 wird das schon erzeugte Kraftstoff-/Brennluftgemisch durch die Dralleinrichtung 22 der Luftdrallzerstäuberdüse 21 weiter mit Brennluft vermischt. Dieses Gemisch wird dann in die Brennkammer 10 eingeleitet und kann dort über eine nicht dargestellte Zündeinrichtung entzündet werden. Es ist aber auch vorgesehen, den Trägerkörper 14 - wie dargestellt - als Glühkerze auszubilden und den Kraftstoff gegebenenfalls so weit vorzuheizen, dass dieser beim Austritt 17 verdampft ist. Dadurch, dass die Glühkerze durch entsprechende Ausgestaltung im Bereich ihres Endes, (das im Ausführungsbeispiel etwa in der Mitte der vor der Luftdrallzerstäuberdüse 21 angeordneten Dralleinrichtung 20 liegt), die höchste Außentemperatur aufweist, (die in Richtung zu dem Eintritt 16 immer weiter abnimmt), kann der austretende Kraftstoff in diesem Bereich entzündet werden. In diesem Fall ist dann keine weitere Zündeinrichtung in der Brennkammer notwendig. Die so erzeugte Flamme wird (durch die Luftdrallzerstäuberdüse hindurch) in die Brennkammer getragen und brennt dort - auch nach Abschalten der Stromzufuhr zu der Glühkerze - als "Pilotflamme" oder "Zündflamme" weiter. Durch Erhöhung der über die Zufuhrleitungseinrichtung 18 zugeführten Kraftstoffmenge kann die Pilotflamme in einem gewissen Rahmen zu einer (Niedrigenergie)-Heizflamme aufgewertet werden. Diese (Niedrigenergie)-Heizflamme reicht je nach Ausgestaltung des Abgasnachbehandlungssystems aus, um die Temperatur in dem Abgas so weit anzuheben, dass in dem Katalysator 7a eine Reaktion erfolgt. Soll aber beispielsweise in dem Partikelfilter 7b angesammelter Ruß direkt abgebrannt werden, ist es notwendig, eine (Hochenergie)-Heizflamme zu erzeugen. Dies geschieht, indem in die Brennkammer 10 zusätzlicher Kraftstoff eingespritzt wird, der von der Pilotflamme entzündet wird. Diese (Hochenergie)-Heizflamme kann circa die zehnfache Heizleistung der Pilotflamme aufweisen.

### Bezugszeichen

- 1: Brennkraftmaschine
- 2: Frischgasleitungssystem
- 3: Abgassammler
- 4: Abgasleitung
- 5: Abgasnachbehandlungssystem
- 6: Brenner
- 7a: Katalysator
- 7b: Partikelfilter
- 8: Auspuffleitung
- 9: Brennergehäuse
- 10: Brennkammer
- 11: Öffnung
- 12a, 12b: Pfeile
- 13: Düsenkörper
- 14: Trägerkörper
- 15: Kraftstoffkanal
- 16: Eintritt
- 17: Austritt
- 18: Zufuhrleitungseinrichtung
- 19: Stutzen
- 20: Dralleinrichtung
- 21: Luftdrallzerstäuberdüse
- 22: Dralleinrichtung

## Patentansprüche

1. Abgasnachbehandlungssystem für eine insbesondere selbstzündende Brennkraftmaschine (1) mit einem in ein Gehäuse eingesetzten Katalysator (7a) und/oder Partikelfilter (7b), dem/denen ein stromaufwärts in einer Abgasleitung (4) angeordneter Brenner (6) zugeordnet ist, dem über eine Kraftstoffdüseneinrichtung Kraftstoff und weiterhin Brennluft zuführbar sind und wobei die Brennluft mit dem aus der Kraftstoffdüseneinrichtung austretenden Kraftstoff in einer nachgeschalteten Luftdrallzerstäuberdüse (21) vermischt wird, wobei an der Kraftstoffdüseneinrichtung eine Heizeinrichtung zum zumindest zeitweiligen Verdampfen des Kraftstoffs vorgesehen ist, **dadurch gekennzeichnet, dass** die Kraftstoffdüseneinrichtung einen sich zumindest von einem Eintritt (16) bis zu einem Austritt (17) erstreckenden Düsenkörper (13) mit darin angeordnetem Trägerkörper (14) aufweist, die zusammen einen filmbildenden Kraftstoffkanal (15) formen.

2. Abgasnachbehandlungssystem nach Anspruch 1, **dadurch gekennzeichnet, dass** der Trägerkörper (14) und der Düsenkörper (13) einen ringförmigen Kraftstoffkanal (15) bilden.

3. Abgasnachbehandlungssystem nach einem der Ansprüche 1 oder 2, **dadurch gekennzeichnet, dass** ein im Bereich des Austritts (17) angeordneter Abschnitt des Trägerkörpers (14) filmablösend ausgebildet ist.

4. Abgasnachbehandlungssystem nach Anspruch 3, **dadurch gekennzeichnet, dass** der Abschnitt über den Austritt (17) hinausragt.

5. Abgasnachbehandlungssystem nach Anspruch 3 oder 4,
**dadurch gekennzeichnet, dass** der Abschnitt aufpilzend ausgebildet ist.

6. Abgasnachbehandlungssystem nach Anspruch 3 oder 4,
**dadurch gekennzeichnet, dass** der Abschnitt einschnürend ausgebildet ist.

7. Abgasnachbehandlungssystem nach einem der vorherigen Ansprüche,
**dadurch gekennzeichnet, dass** der Querschnitt des Austritts (17) veränderbar ist.

8. Abgasnachbehandlungssystem nach Anspruch 7,
**dadurch gekennzeichnet, dass** die Heizeinrichtung in den Düsenkörper (13) integriert ist.

9. Abgasnachbehandlungssystem nach Anspruch 7 oder 8,
**dadurch gekennzeichnet, dass** die Heizeinrichtung in den Trägerkörper (14) integriert ist.

10. Abgasnachbehandlungssystem nach Anspruch 9,
**dadurch gekennzeichnet, dass** der Trägerkörper (14) ein Glühstift ist.

11. Verfahren zum Betreiben eines Abgasnachbehandlungssystems für eine insbesondere selbstzündende Brennkraftmaschine (1) mit einem in einem Gehäuse eingesetzten Katalysator (7a) und/oder Partikelfilter, (7b) dem/denen ein stromaufwärts in einer Abgasleitung (4) angeordneter Brenner (6) zugeordnet ist, dem über eine Kraftstoffdüseneinrichtung Kraftstoff und weiterhin Brennluft zuführbar sind, wobei an der Kraftstoffdüseneinrichtung eine Heizeinrichtung zum zumindest zeitweiligen Verdampfen des Kraftstoffs vorgesehen ist, und wobei die Brennluft mit dem aus der Kraftstoffdüseneinrichtung austretenden Kraftstoff in einer nachgeschalteten Luftdrallzerstäuberdüse (21) vermischt wird,
**dadurch gekennzeichnet, dass** die Kraftstoffdüseneinrichtung einen sich zumindest von einem Eintritt (16) bis zu einem Austritt (17) erstreckenden Düsenkörper (13) mit darin angeordnetem Trägerkörper (14) aufweist, die zusammen einen filmbildenden Kraftstoffkanal (15) formen und dass
a) während einer Startphase des Brenners (6) durch eine Heizeinrichtung eine Verdampfung und gleichzeitige Entzündung des Kraftstoffs zu einer Zündflamme eingestellt wird,
b) die Zündflamme in eine der Luftdrallzerstäuberdüse (21) nachgeschalteten und dem Katalysator (7a) und/oder Partikelfilter (7b) vorgeschalteten Brennkammer getragen wird,
c) der Brennkammer (10) mit Kraftstoff vermischte Brennluft zugeführt wird und dieses Gemisch von der Zündflamme entzündet wird
d) und anschließend die Heizeinrichtung abgeschaltet wird.

## Claims

1. Exhaust-gas aftertreatment system for an in particular auto-ignition internal combustion engine (1), having a catalytic converter (7a) and/or particle filter (7b) inserted into a housing, said catalytic converter and/or particle filter being assigned a burner (6) arranged upstream in an exhaust line (4), to which burner fuel and furthermore combustion air can be supplied by way of a fuel nozzle device, and wherein the combustion air is mixed with the fuel emerging from the fuel nozzle device in an air swirl atomizer nozzle (21) positioned downstream, wherein, on the fuel nozzle device, there is provided a heating device for at least intermittently evaporating the fuel, **characterized in that** the fuel nozzle device has a nozzle body (13) which extends at least from an inlet (16) to an outlet (17) and which has a carrier body (14) arranged therein, which nozzle body and carrier body together form a film-forming fuel duct (15).

2. Exhaust-gas aftertreatment system according to Claim 1, **characterized in that** the carrier body (14) and the nozzle body (13) form a ring-shaped fuel duct (15).

3. Exhaust-gas aftertreatment system according to either of Claims 1 and 2, **characterized in that** a section of the carrier body (14) which is arranged in the region of the outlet (17) is designed for film detachment.

4. Exhaust-gas aftertreatment system according to Claim 3, **characterized in that** the section projects beyond the outlet (17).

5. Exhaust-gas aftertreatment system according to Claim 3 or 4, **characterized in that** the section is of mushroom-shaped design.

6. Exhaust-gas aftertreatment system according to Claim 3 or 4, **characterized in that** the section is of narrowing design.

7. Exhaust-gas aftertreatment system according to one of the preceding claims, **characterized in that** the cross section of the outlet (17) is variable.

8. Exhaust-gas aftertreatment system according to Claim 7, **characterized in that** the heating device is integrated into the nozzle body (13).

9. Exhaust-gas aftertreatment system according to Claim 7 or 8, **characterized in that** the heating device is integrated into the carrier body (14).

10. Exhaust-gas aftertreatment system according to Claim 9, **characterized in that** the carrier body (14) is a glow plug.

11. Method for operating an exhaust-gas aftertreatment system for an in particular auto-ignition internal combustion engine (1), having a catalytic converter (7a) and/or particle filter (7b) inserted into a housing, said catalytic converter and/or particle filter being assigned a burner (6) arranged upstream in an exhaust line (4), to which burner fuel and furthermore combustion air can be supplied by way of a fuel nozzle device, wherein, on the fuel nozzle device, there is provided a heating device for at least intermittently evaporating the fuel, and wherein the combustion air is mixed with the fuel emerging from the fuel nozzle device in an air swirl atomizer nozzle (21) positioned downstream, **characterized in that** the fuel nozzle device has a nozzle body (13) which extends at least from an inlet (16) to an outlet (17) and which has a carrier body (14) arranged therein, which nozzle body and carrier body together form a film-forming fuel duct (15), and **in that**
a) during a starting phase of the burner (6), an evaporation and simultaneous ignition of the fuel to form a pilot flame are performed by way of a heating device,
b) the pilot flame is carried into a combustion chamber which is positioned downstream of the air swirl atomizer nozzle (21) and upstream of the catalytic converter (7a) and/or particle filter (7b),
c) combustion air mixed with fuel is supplied to the combustion chamber (10), and said mixture is ignited by the pilot flame,
d) and the heating device is subsequently deactivated.

## Revendications

1. Système de post-traitement de gaz d'échappement pour un moteur à combustion interne notamment à autoallumage (1) avec un catalyseur (7a) inséré dans un boîtier et/ou un filtre à particules (7b) auquel/auxquels est associé un brûleur (6) disposé en amont dans une conduite de gaz d'échappement (4), auxquels peuvent être acheminés, par le biais d'un dispositif de buse à carburant, du carburant ainsi que de l'air de combustion, et dans lequel l'air de combustion est mélangé avec le carburant sortant du dispositif de buse à carburant dans une buse de pulvérisation à tourbillonnement d'air montée en aval (21),
dans lequel un dispositif de chauffage est prévu au niveau du dispositif de buse à carburant pour l'évaporation au moins temporaire du carburant, caractérisé eh ce que le dispositif de buse à carburant présente un corps de buse (13) s'étendant au moins depuis une entrée (16) jusqu'à une sortie (17) avec un corps de support (14) disposé dans celui-ci, qui forment ensemble un canal de carburant formant un film (15).

2. Système de post-traitement de gaz d'échappement selon la revendication 1, **caractérisé en ce que** le corps de support (14) et le corps de buse (13) forment un canal de carburant annulaire (15).

3. Système de post-traitement de gaz d'échappement selon l'une quelconque des revendications 1 ou 2, **caractérisé en ce qu'**une portion du corps de support (14) disposée dans la région de la sortie (17) est réalisée avec un décollement de film.

4. Système de post-traitement de gaz d'échappement selon la revendication 3, **caractérisé en ce que** la portion fait saillie au-delà de la sortie (17).

5. Système de post-traitement de gaz d'échappement selon la revendication 3 ou 4, **caractérisé en ce que** la portion est réalisée en corolle.

6. Système de post-traitement de gaz d'échappement selon la revendication 3 ou 4, **caractérisé en ce que** la portion est réalisée en se rétrécissant.

7. Système de post-traitement de gaz d'échappement selon l'une quelconque des revendications précédentes, **caractérisé en ce que** la section transversale de la sortie (17) est variable.

8. Système de post-traitement de gaz d'échappement selon la revendication 7, **caractérisé en ce que** le dispositif de chauffage est intégré dans le corps de buse (13).

9. Système de post-traitement de gaz d'échappement selon la revendication 7 ou 8, **caractérisé en ce que** le dispositif de chauffage est intégré dans le corps de support (14).

10. Système de post-traitement de gaz d'échappement selon la revendication 9, **caractérisé en ce que** le corps de support (14) est un crayon de préchauffage.

11. Procédé pour faire fonctionner un système de post-traitement de gaz d'échappement pour un moteur à combustion interne notamment à autoallumage (1) comprenant un catalyseur (7a) inséré dans un boîtier et/ou un filtre à particules (7b) auquel / auxquels est associé un brûleur (6) disposé en amont dans une conduite de gaz d'échappement (4), auquel, par le biais d'un dispositif de buse à carburant, du carburant et en outre de l'air de combustion peuvent être acheminés, un dispositif de chauffage étant prévu au niveau du dispositif de buse à carburant pour l'évaporation au moins temporaire du carburant, et l'air de combustion étant mélangé avec le carburant sortant du dispositif de buse à carburant dans une buse de pulvérisation à tourbillonnement d'air montée en aval (21),
**caractérisé en ce que** le dispositif de buse à carburant présente un corps de buse (13) s'étendant au moins depuis une entrée (16) jusqu'à une sortie (17) avec un corps de support (14) disposé dans celui-ci, qui forment ensemble un canal de carburant formant un film (15) et **en ce que**
a) pendant une phase de démarrage du brûleur (6), une évaporation et un allumage simultané du carburant pour produire une flamme d'allumage sont ajustés par un dispositif de chauffage,
b) la flamme d'allumage est amenée dans une chambre de combustion montée en aval de la buse de pulvérisation à tourbillonnement d'air (21) et en amont du catalyseur (7a) et/ou du filtre à particules (7b),
c) la chambre de combustion (10) est alimentée en air de combustion mélangé avec du carburant et ce mélange est allumé par la flamme d'allumage, et
d) ensuite le dispositif de chauffage est coupé.
